# EUROPEAN PATENT APPLICATION

(11) **EP 3 821 846 A1**
(43) Date of publication of application: **19.05.2021**
(21) Application number: 20207571.9
(22) Date of filing: 13.11.2020
(51) Int. Cl.: A61C 1/08, A61C 8/00

(54) **JUXTA-OSSEOUS IMPLANT PLACEMENT ASSIST SYSTEM**

(30) Priority: 14.11.2019 US 201962935297 P
(71) Applicant: Biomet 3I, LLC, Florida 33410 (US)
(72) Inventor: MORAN, Esther, Green Acres, Florida 33413 (US); ROGERS, Dan P, Palm Beach Gardens, Florida 33418 (US); GUBBI, Prabhu, Palm Beach Gardens, Florida 33410 (US); AJAMI, Elnaz, Palm Beach Gardens, Florida 33418 (US)
(74) Representative: Mays, Julie

(57) **Abstract**

Implant placement assist (IPA) systems and methods for creating a dental implant chamber in an alveolar ridge of a jawbone of a patient, the alveolar ridge being atrophied and needing augmentation before a dental implant can be placed. The IPA system includes a non-osseous spacer and an anchor to maintain a position of the non-osseous spacer within a bone graft cavity of a patient. Bone graft material can be positioned around the non-osseous spacer and the anchor and maintained within the bone graft cavity during healing, where bone is regenerated within the bone graft cavity. After healing, the non-osseous spacer can be removed, thereby forming the dental implant chamber that is immediately ready to receive a dental implant.

## Description

### CLAIM OF PRIORITY

This application claims the benefit of U.S. Provisional Patent Application Serial No. 62/935,297, filed on November 14, 2019, the benefit of priority of which is claimed hereby, and which is incorporated by reference herein in its entirety.

### TECHNICAL FIELD

This document pertains generally, but not by way of limitation, to medical devices for the treatment of bone defects, for example, orthopedic and oral maxillofacial disorders such as periodontal disorders, and more particularly to a method and apparatus for augmenting a patient's alveolar ridge or jawbone to receive a dental implant.

### BACKGROUND

Surgical repair and/or reconstruction procedures including those employing implants are widely used in dental and oral surgery for restoration of the jaw anatomy. These procedures are often used to treat bone defects and disorders of the jaw, which may result and/or be caused from periodontal diseases, bone, gum and/or tooth loss, trauma, tumors, infections and other complications. New bone growth is often desired to repair a defect or to build up the jawbone so that enough bone exists to embed and retain an implant.

When an extracted or otherwise missing tooth is not immediately grafted or replaced with an implant, atrophy of the jawbone occurs over time. Consequently, individuals who have been partially edentulous for an extended period of time are left with an atrophic alveolar ridge that cannot securely support a dental implant/prosthesis. Furthermore, the edentulous individual faces deteriorated aesthetics and a compromised ability to chew leaving the quality of the individual's oral life in an unfortunate state.

In some cases, a ridge augmentation procedure is employed to add bone (e.g., bone height) to the jaw so that sufficient alveolar bone exists to place dental implants. Such procedures can employ a device to facilitate bone growth. After new bone has formed, the devices employed during the augmentation are removed. However, the removal of these devices can cause tissue disruption that undesirably exposes new bone and disrupts vascularity leading to associated complications or can be difficult to remove due to bone overgrowth. This disclosure describes an improvement over these prior art technologies.

### OVERVIEW

Generally, to regain alveolar bone a vertical ridge augmentation (VRA) procedure is done to repair (e.g., grow) bone. After bone has healed, dental implant placement can be attempted at the augmentation site. Current VRA treatment and subsequent implant placement can take approximately about twelve to fourteen months. For example, current VRA procedure/implant placement includes a full mucoperiosteal flap is formed by reflecting a flap of mucosal tissue from the bone. After the mucoperiosteal flap is formed, the crestal bone is decorticized, bone graft is placed within a bone void, an incision is performed to gain free mucosa, a membrane is placed across the midline of the graft, and the mucosa is sutured. The graft healing period can last around four to six months. After the graft healing period, another full mucoperiosteal flap is formed, the osteotomy is prepared, the dental implant is inserted, and the mucosal fap is re-appositioned. The implant healing period can last around four to six months. After the implant healing period, another mucoperiosteal flap is formed, a healing abutment is coupled to the dental implant, the mucosa is re-appositioned and sutured around the healing abutment. The mucosal healing period last about three to six weeks. Additionally, the process to fabricate the restorative component can take around three weeks depending on the process used. Thus, the current VRa procedure/implant placement treatment can take between twelve (12) to fourteen (14) months.

There are various disadvantages to the current VRA procedure and subsequent implant placement. The success of the VRA procedure grafting a bone ridge having the shape that was predetermined can be unlikely because of shifting of the graft material, loss of angiogenesis/osteogenesis, mucosal shrinkage, and poor oxygen permeability through the membrane. The graft material can shift, e.g., by a patient chewing on treatment site and the patient irritating the treatment site, such as with their tongue or other objects. During the grafting surgery, microbes can be inadvertently introduced, which can cause inflammation and halt osteogenesis. Mucosal shrinkage can occur during healing and if the mucosal shrinks this can cause pressure on the graft field altering the predetermined shape of the bone ridge. Finally, if the membrane has poor oxygen permeability, the loss or reduction of oxygen can impede osteogenesis.

The present disclosure provides a bone augmentation system that assists in the ridge augmentation and formation of an implant chamber that receives a dental implant. The bone augmentation system of present disclosure can improve the vertical ridge augmentation success, allow a prosthesis (e.g., dental implant) to be inserted after the graft healing period, and provides immediate and long-lasting functionality.

The present disclosure provides systems and methods for treating bone defects such that bone augmentation and the dental implant chamber are created simultaneously. The bone augmentation system includes a non-osseous spacer (also referred to herein as "the spacer") and an anchor. The anchor is a bioresorbable scaffold that can receive/retain bone graft material and be placed in the bone craft cavity. For example, the bone graft material can be layered on, in, around, above, and below the anchor. The anchor is configured to be securely positioned within the bone graft cavity along a surgical site in a patient's jaw such that a position of the anchor within the surgical site can be maintained. The anchor includes a spacer retention portion that is configured to receive and/or engage the non-osseous spacer in a predetermined position within the bone graft cavity. The non-osseous spacer is positioned into the spacer retention portion of the anchor such that a top surface ascends to just above a desired level of the crestal bone. Any remaining voids are filled with the bone graft material and the bone graft cavity is covered with a membrane, if desired. The mucosa is closed to allow for healing during a healing period.

As discussed herein, the non-osseous spacer is a non-osseous fixating body that minimizes/prevents osseointegration with the surrounding bone and with new bone as it is formed. During the healing period, as new bone grows around the non-osseous spacer, the non-osseous spacer forms the implant chamber by preventing bone growth within the area that the non-osseous spacer occupies. After the healing period, the site is opened, the non-osseous spacer is removed revealing the dental implant chamber, and a dental implant is inserted into the dental implant chamber. A diameter of the dental implant can have a diameter such that threads on the dental implant are greater than a width of the dental implant chamber such that the threads carve into the new bone of the newly restored ridge and screw into the bone. The compression of the threads and the implant fixation in the bone provide immediate fixation and stability.

In one example, an implant placement assist ("IPA") system is provided. The IPA system is a bone augmentation system that simultaneously can promote grow bone and form a dental implant chamber during healing. The IPA system includes an anchor and a non-osseous spacer. The anchor is formed from a bioresorbable material and includes a spacer retention portion to maintain a position of the non-osseous spacer within the bone graft cavity. As discussed herein, the anchor can take on various shapes and configurations. The shape/configuration of the anchor and retention mechanism used to maintain the position of the anchor can vary based on a variety of factors, e.g., size of surgical site, material, location in the mouth, etc. As discussed herein, the anchor can be retained within/coupled to the bone graft cavity via, e.g., fasteners and/or interference fit (i.e., press fit or friction fit). The non-osseous spacer can have a similar shape (e.g., cylindrical, tapered) of the dental implant intended to be implanted into the patient. Further, the non-osseous spacer has a surface roughness that does not promote/minimizes osseointegration with surrounding bone or new bone growth.

The invention comprises the systems and methods possessing the construction, combination of elements, and arrangement of parts which are exemplified in the following detailed description. For a fuller understanding of the nature and objects of the invention, reference should be made to the following detailed description taken in connection with the accompanying drawings.

This Overview is intended to provide non-limiting examples of the present subject matter - it is not intended to provide an exclusive or exhaustive explanation. The Detailed Description below is included to provide further information about the present apparatuses and methods.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates a side cutaway view in a cross-section of a jawbone, according to one example embodiment of the present disclosure.
FIG. 2 illustrates the side cutaway view in FIG. 1 including the IPA system, according to one example embodiment of the present disclosure.
FIG. 3A illustrates a perspective view of a non-osseous spacer, according to one example embodiment of the present disclosure.
FIG. 3B illustrates a top-down view of the non-osseous spacer in FIG. 3A.
FIG. 4 illustrates a side-view of a healing cap, according to one example embodiment of the present disclosure.
FIG. 5 illustrates a side-view of a cover screw, according to one example embodiment of the present disclosure.
FIG. 6 illustrates a simplified view of an IPA system including a non-osseous spacer and an anchor positioned within a bone graft cavity, according to one example embodiment of the present disclosure.
FIG. 7 illustrates the simplified view of the IPA system in FIG. 6 including a membrane, according to one example embodiment of the present disclosure.
FIG. 8 illustrates a perspective view of the anchor of the IPA system shown in FIGS. 6 and 7.
FIG. 9 illustrates a simplified view of an IPA system including a non-osseous spacer and an anchor positioned within a bone graft cavity, according to one example embodiment of the present disclosure.
FIG. 10 illustrates the simplified view of the IPA system in FIG. 9 including a membrane, according to one example embodiment of the present disclosure.
FIG. 11A illustrates a perspective view of the anchor of the IPA system shown in FIGS. 9 and 10.
FIG. 11B illustrates a top-down view of the anchor shown in FIG. 11A.
FIG. 12 illustrates a cross-sectional view of an IPA system including a cover screw coupled to the non-osseous spacer, according to one example embodiment of the present disclosure.
FIG. 13 illustrates a cross-sectional view of an IPA system including a healing element coupled to the non-osseous spacer, according to one example embodiment of the present disclosure.
FIG. 14 illustrates a perspective view of an anchor, according to one example embodiment of the present disclosure.
FIG. 15 illustrates a perspective view of an anchor, according to one example embodiment of the present disclosure.
FIG. 16A illustrates a perspective view of an anchor, according to one example embodiment of the present disclosure.
FIG. 16B illustrates a top-down view of the anchor shown in FIG. 16.
FIG. 17 illustrates a side cutaway view in a cross-section of an IPA system positioned within a bone graft cavity, according to one example embodiment of the present disclosure.
FIG. 18 illustrates a perspective view of the anchor shown in FIG. 17.
FIG. 19 illustrates a side cutaway view in a cross-section of an IPA system positioned within a bone graft cavity, according to one example embodiment of the present disclosure.
FIG. 20 illustrates a perspective view of the anchor shown in FIG. 19.
FIG. 21 illustrates an IPA system, according to one example embodiment of the present disclosure.
FIG. 22A illustrates a sideview of a spacer removal tool, according to one example embodiment of the present disclosure.
FIG. 22B illustrates a bottom-up view of the spacer removal tool shown in FIG. 22A.
FIG. 23 illustrates a sideview of a spacer removal tool, according to one example of the present disclosure.
FIG. 24 illustrates a side cutaway view in a cross-section of the jawbone of a patient after the non-osseous spacer has been removed, according to one example of the present disclosure.
FIG. 25 illustrates a side cutaway view in a cross-section of the jawbone of a patient after the non-osseous spacer has been removed and a dental implant and healing abutment has been implanted, according to one example embodiment of the present disclosure.
FIG. 26 illustrates a side cutaway view in a cross-section of the jawbone of a patient shown in FIG. 25 where the healing abutment has been replaced with the final prosthesis, according to one example embodiment of the present disclosure.

### DETAILED DESCRIPTION

As discussed above, the present application relates to an implant placement assist system and methods for treating bone defects to be able to receive a dental implant. In one example, bone defects are treated so that bone augmentation occurs while an implant chamber is formed. Therefore, once the bone augmentation is completed, the implant chamber that has formed in the new bone is ready to receive a dental implant. While not shown, other examples using similar systems, devices, and methodologies are contemplated. This includes, but is not limited to, other medical implants for other areas of the body such as shoulder, hips, hands, feet, and the like.

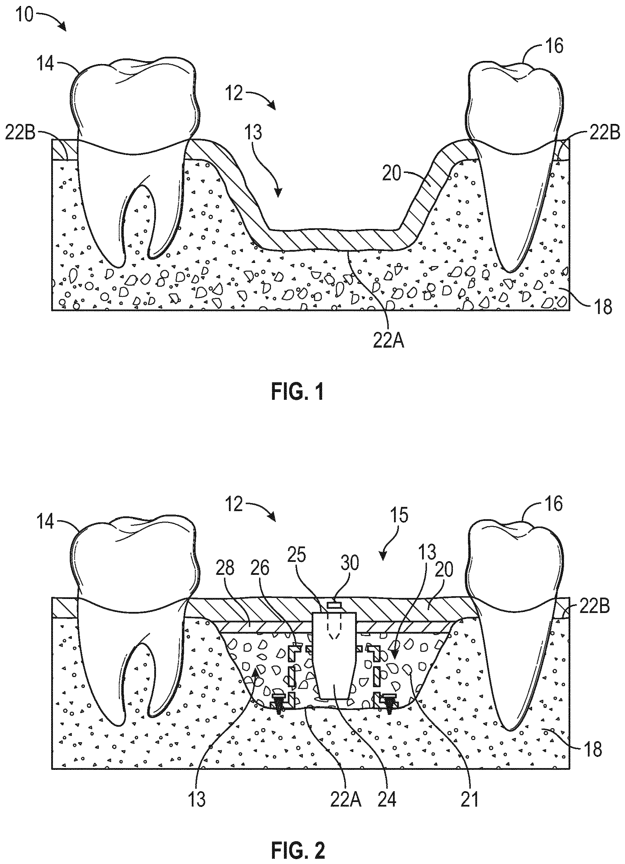

FIG. 1 illustrates a section of a patient's jaw 10 where the patient is missing teeth at a surgical site 12. In the example shown in FIG. 1, the surgical site 12 is positioned between two teeth, e.g., tooth 14 and tooth 16. As discussed herein, for various reasons some patients have an atrophic alveolar ridge that cannot securely support a dental implant/prosthesis. The jaw 10 includes teeth 14, 16, bone 18, and gingival tissue 20. As seen in FIG. 1, an alveolar ridge 22A, along the surgical site 12, is insufficient to receive an implant. For example, there is not a sufficient depth of bone along the alveolar ridge 22A to stabilize an inserted implant. Moreover, if the height of the implant is to match the alveolar ridge 22B of the neighboring teeth 14, 16, a portion of the implant would be exposed from the bone 18 and the gingival soft tissue 20 at the alveolar ridge 22A. If an implant was chosen such that the top surface aligned with the current alveola ridge 22A along the surgical site 12, the alignment and aesthetics of the implant would not be pleasing. Moreover, in some instances, the bone 18 along the surgical site 12 is impaired such that the bone 18 at the surgical site 12 is not strong enough to receive and retain an implant. As seen in FIG. 1, there is a bone growth cavity 13 at the surgical site 12. In order for an implant to be placed at the surgical site 12, a ridge augmentation procedure will need to be done to repair and grow sufficient bone within the bone growth cavity 13 so that the surgical site 12 will be able to receive the dental implant.

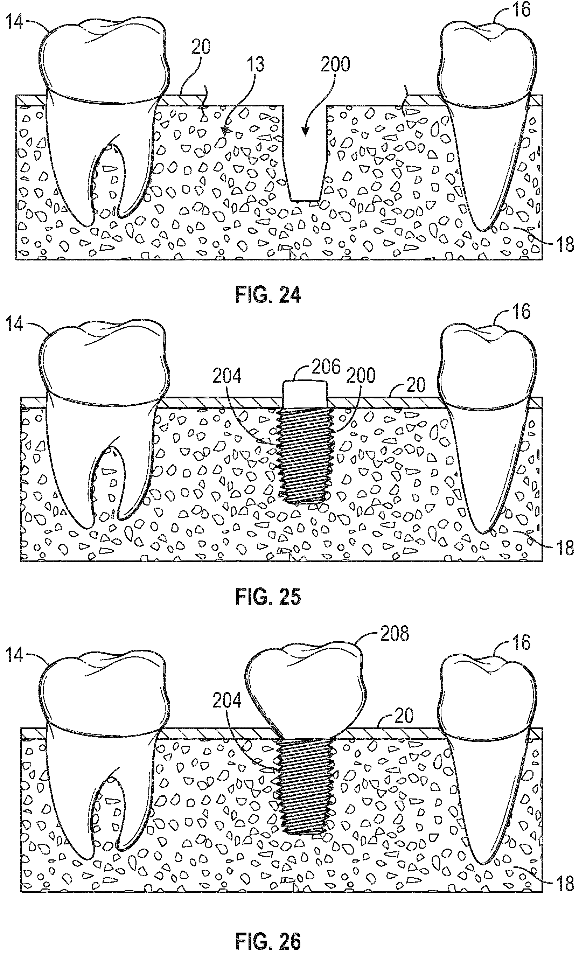

FIG. 2 illustrates the implant placement assist ("IPA") system 15 (also referred to herein as "system 15" and "IPA system 15") positioned within a simplified version of the patient's jaw 10 including the bone 18 and the gingival soft tissue 20. The system 15 includes a non-osseous spacer 24 and an anchor 26. As discussed herein, the system 15 assists in the ridge augmentation and forms an implant chamber (see implant chamber 200 of FIG. 24) to receive the dental implant. As seen in FIG. 2, the anchor 26 is positioned within the bone growth cavity 13 and is configured to receive and maintain a position of the non-osseous spacer 24 within the bone growth cavity 13 at the surgical site 12. As discussed herein, bone graft materials can be used to surround and fill any voids around the non-osseous spacer 24 and the anchor 26 within the bone growth cavity 13. The anchor 26, non-osseous spacer 24, and the bone graft material 21 are combined and positioned within the bone growth cavity 13 such that a top surface 25 of the spacer 24 ascends to just above a desired level of the crestal bone.

As discussed herein, the bone graft material is packed around the non-osseous spacer 24 and the anchor 26 to promote new bone growth within the bone growth cavity 13. Any bone graft material, such as autogenous bone or synthetics, alone or mixed with autogenous bone (e.g., Bioglass® or Bio Oss®), may be utilized as the bone graft material. Bone graft material is utilized in oral implant surgery and in osseous alveolar and sinus augmentation procedures and is available from numerous sources including, but not limited to, Zimmer Biomet (which supplies Puros® Allograft Particulate, RegenerOss® Synthetic, and Endobon® xenograft granules) and numerous other suppliers.

In one embodiment, the bone graft material can be granular or powder-like, so that it may be packed into irregularly shaped sockets, cavities or other sites in bone formations. The granular bone graft material therefore should be held in place in the patient's site (e.g., bone graft cavity 13) until it matures into a solid plug of host bone into which an implant such as a dental implant can be secured. To facilitate true bone formation, nutrients, oxygen and blood should be able to access the bone graft material, while preventing the soft tissue/gingival around the site from growing into the bone graft material 21.

In order to secure the bone graft material 21 within the bone graft cavity 13 and prevent the soft tissue 20 from growing into the bone graft material 21, an optional membrane 28 can be used. As shown in FIG. 2, a membrane 28 can be placed on top of at least the bone graft material 21 within the bone graft cavity 13. In one example, the membrane 28 can cover a portion (or all of) of the non-osseous spacer 24. However, as shown, the membrane 28 includes an opening for the non-osseous spacer 24.

As discussed herein, the membrane 28 prevents the bone graft material 21 from migrating out of the bone graft cavity 13, while allowing oxygen, blood, and other applied medicaments to access the bone graft material 21. In one example, the membrane 28 is formed from a bioresorbable membrane. For example, the membrane 28 can be selected from, but not limited to, OsseoGuard®, OsseoGuard Flex®, Biomend®, Biomend Extend™, and CopiOs® Pericardium membranes from Zimmer Biomet or other similar membranes.

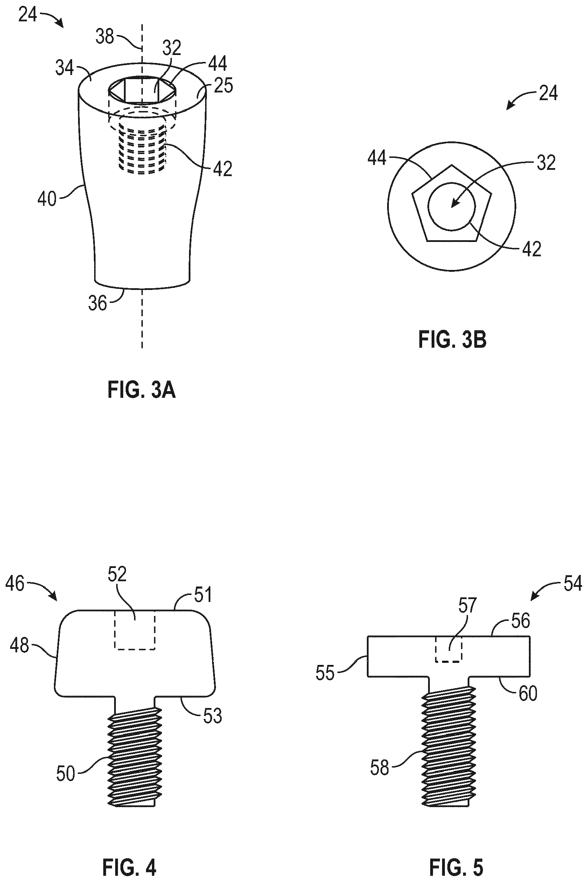

FIGS. 3A and 3B illustrate the non-osseous spacer 24. The non-osseous spacer 24 can have the shape of a dental implant to be implanted into the jawbone of the patient. In an example, a diameter of the non-osseous 24 spacer can be less than the maximum diameter of threads on the dental implant such that when the dental implant is implanted into the dental implant chamber formed by the non-osseous spacer 24, the compression of the threads and the implant fixation in the bone provide immediate fixation and stability.

As discussed herein, the non-osseous spacer 24 can prevent or minimize osseointegration with surrounding bone or new bone growth such that the non-osseous spacer 24 can be removed, after a healing period where the new bone is formed, without disruption of the surrounding bone. In one example, the non-osseous spacer 24 has a surface roughness between about 0 Ra and about 1 Ra. One example, the non-osseous spacer 24 has a surface roughness less than about 0.03 Ra. While other means for preventing/minimizing osteointegration are contemplated, the surface of the non-osseous spacer 24 should allow for removal from newly formed bone without adversely damaging or disrupting the newly formed bone. The force required to remove the non-osseous spacer 24 should be minimized since the osteointegration is minimized by the surface of the non-osseous spacer 24.

As shown in FIG. 3A and 3B the non-osseous spacer 24 includes a body 40 extending, along a longitudinal axis 28, from a proximal end 34 having a top surface 25 to an apical end 36. The dimensions of the non-osseous spacer 24 should be slightly less than the maximum diameter of threads of the dental implant to be implanted into the patient. However, various other considerations can determine the shape and dimensions of the non-osseous spacer 24.

In one example, the non-osseous spacer 24 includes a bore 32 having a first portion 44 and a second portion 42. In one example, the second portion 42 is threaded and is configured to optionally mate with an attachment member such as a healing abutment (shown in FIG. 4) or a cover screw (shown in FIG. 5), during the healing period, where new bone is being formed. After the healing period, the healing abutment or cover screw can be removed and the bore 32 can be accessible such that one or more removal tools can be used to remove the non-osseous spacer 24 from the bone graft cavity 13 thereby forming the dental implant chamber.

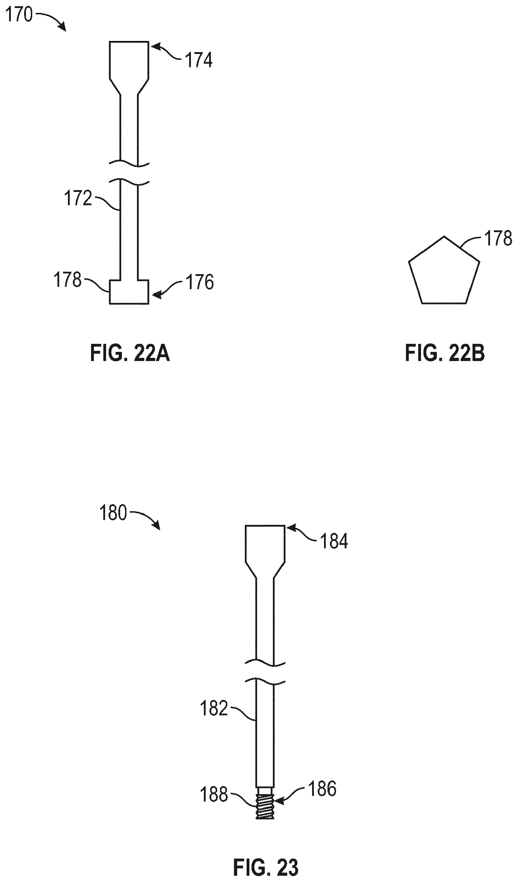

In one example, the first portion 44 of the bore 32 has a non-rotational shape that is configured to mate with a non-rotational shape of a removal tool, e.g., removal tool 170 shown in FIGS. 22A and 22B. As discussed more herein, after a healing period where the new bone has been formed, the first portion 44, if needed, can engage the removal tool such that a user can apply a rotational force to loosen the non-osseous spacer 24 within the dental implant chamber that has been formed. The second portion 42 of the bore 32 can engage with another removal tool, e.g., removal tool 180 shown in FIG. 23, such that a linear force can be applied to remove the non-osseous spacer 24 from the bone graft cavity 13 forming the dental implant chamber. As discussed more herein, one or more removal tools can be used to remove the non-osseous spacer 24 with rotational and/or linear force from the bone craft cavity with minimal disruption to surrounding bone and tissue.

FIG. 4 illustrates an example embodiment of a healing abutment 46 that can be coupled with the non-osseous spacer 24. The healing abutment 46 includes a body portion 48 extending from a top surface 51 to a bottom surface 53. The healing abutment 26 includes a threaded post 50 extending from the bottom surface 53 of the body portion 48 that is configured to engage the second portion 42 of the bore 32 that is threaded. The healing abutment 46 can include a bore 52 that can be coupled with an insertion tool to couple the healing abutment 26 to the non-osseous spacer 24. When coupled, the bottom surface 53 of the healing abutment can contact the top surface 25 of the non-osseous spacer 24 (shown in FIG. 3A). The body portion 48 of the healing abutment 46 can be used to start shaping the soft tissue in preparation for receiving a final prosthesis. Thus, the cross-sectional shape of the body portion 46 can have an anatomical shape and may not be circular.

FIG. 5 illustrates an example embodiment of a cover screw 54 that can be coupled with the non-osseous spacer 24. The cover screw 54 includes a body portion 55 extending from a top surface 56 to a bottom surface 60. The cover screw 54 includes a threaded post 58 extending from the bottom surface 60 of the body portion 55 that is configured to engage the second portion 42 of the bore 32 that is threaded. The cover screw 54 can include a bore 57 that can be coupled with an insertion tool to couple the cover screw 54 to the non-osseous spacer 24. When coupled, the bottom surface 60 of the healing abutment can contact the top surface 25 of the non-osseous spacer 24 (shown in FIG. 3A).

Whereas the body portion 48 of the healing abutment 46 can be used to shape soft tissue and in some embodiments extend through the membrane and the soft tissue, the body portion 55 of the cover screw 54 can be positioned beneath at least the soft tissue and in some embodiments beneath both the soft tissue and the membrane.

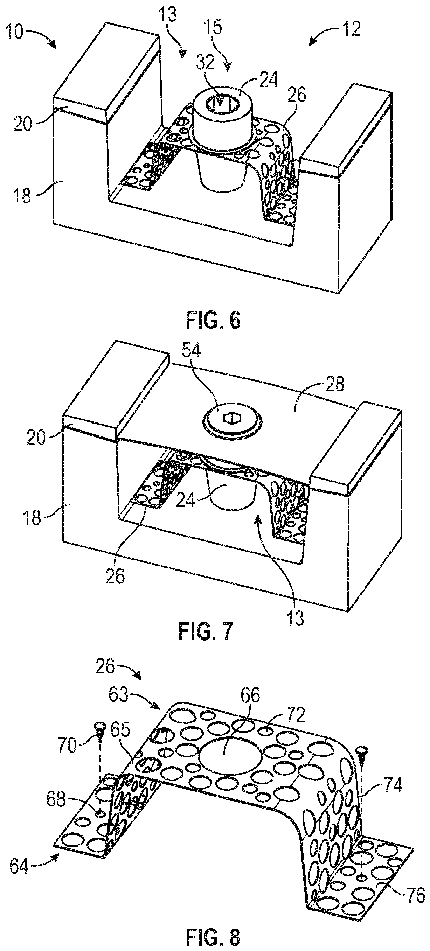

FIGS. 6-8 illustrate an example IPA system 15 positioned within a patient's jaw 10 without the bone graft material for simplicity. As shown in FIG. 6, the non-osseous spacer 24 is positioned within the anchor 26 such that the non-osseous spacer 24 is maintained at a predetermined location within the bone graft cavity 13. FIG. 7 illustrates the cover screw 54 attached to the non-osseous spacer 25 and the membrane 28 covering the bone graft cavity 13. FIG. 7 illustrates the anchor 26 shown in FIG. 2 and 6-8. The anchor 26 extends from a proximal end 63 to an apical end 64. The proximal end 63 includes a body 64 defining a spacer retention portion 66 that is configured to receive and maintain a position of the non-osseous spacer 24. As shown in FIG. 8, the spacer retention portion 66 is an opening along the body 64.

In one example, the anchor 26 includes two elongated legs 74 that extend from the body 65 at the proximal end 63 to the apical end 64. In one example, the elongated legs 74 at the apical end 64 can include a flange 76. That flanges 76 can extend away from the elongate legs 74 to help stabilize the anchor 26 within the bone graft cavity 13.

In an example, the anchor 26 is formed from a bioresorbable material and will degrade within the patient's jaw over time while new bone is formed within the bone graft cavity 13. As discussed herein, the non-osseous spacer 24 has a surface that does not promote osseous fixation such that after the healing period, the anchor 24 can be removed from the surgical site 12 with minimal torque. The space remaining after the non-osseous spacer 24 is removed is the dental implant chamber (i.e., osteotomy) that can receive the dental implant. As the new bone forms, the bioresorbable material is resorbed into the patient's bone. In an example, the anchor can be formed from materials including, but not limited to, polymers such as PLGA and copolymers such as PGA:PLLA, ceramics such as βTCP, and composites such as u-HA/PLLA.

In addition to being bioresorbable, the anchor 26 can be malleable such that the anchor 26 can be manually manipulated to have the best fit within the bone graft cavity 13. In one example, the anchor 26 can maintain a position within the bone graft cavity 13 via mechanical engagement between the anchor 26 and the patient's jaw. For example, fasteners, such as fasteners 70, can be used to secure the anchor 26 to the patient's bone 18. In that instance, the fasteners 70 can extend through apertures 68 to couple the anchor 26 to the bone 18. In other examples, the anchor 26 can have an interference fit within the bone graft cavity 13 to maintain the position of the non-osseous spacer 24 within the bone growth cavity 13. Additionally, mechanical engagement and interference fits can be used separately or together to securely position the anchor 26 within the bone graft cavity 13. The condition, shape, and other patient considerations can be taken into account in determining how best to secure the non-osseous spacer 24 within the bone growth cavity 13.

In one example, the anchor 26 can include a plurality of pores 72. The pores 72 enable the bone graft material to become tightly packed and entwined with the anchor 26 to minimize any gaps in the newly forming bone. The size and shape of the pores 72 can be based on the size and shape of the anchor 26 and/or the bone graft material being used to maximize the interaction between the anchor 26 and the bone graft material while still maintaining sufficient rigidity of the anchor 26.

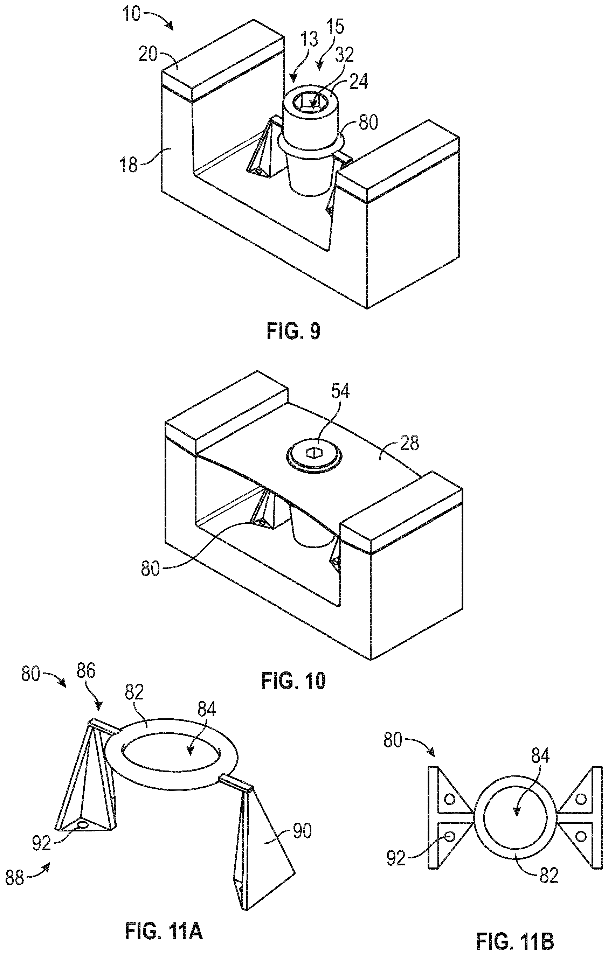

FIGS. 9-11 illustrate an example IPA system 15 positioned within a patient's jaw 10 without the bone graft material for simplicity. FIGS. 9-11 are similar to FIGS. 6-8 but include anchor 80 instead of anchor 26. As shown in FIG. 9, the non-osseous spacer 24 is positioned within the anchor 80 such that the non-osseous spacer 24 is maintained at a predetermined location within the bone graft cavity 13. FIG. 7 illustrates the cover screw 54 attached to the non-osseous spacer 25 and the membrane 28 covering the bone graft cavity 13. FIGS. 11A and 11B illustrate the anchor 80. The anchor 80 extends from a proximal end 86 to an apical end 88. The proximal end 86 includes a body 82 defining a spacer retention portion 84 that is configured to receive and maintain a position of the non-osseous spacer 24. As shown in FIGS. 11A and 11B, the spacer retention portion 84 is an opening along the body 82.

In one example, the anchor 80 includes two elongated legs 90 that extend from the body 82 at the proximal end 86 to the apical end 88. In on example, the elongated legs 90 at the apical end 88 can include apertures 92 configured to receive fasteners (such as fasteners 70 shown in FIG. 8) to couple the anchor 80 to the bone 18.

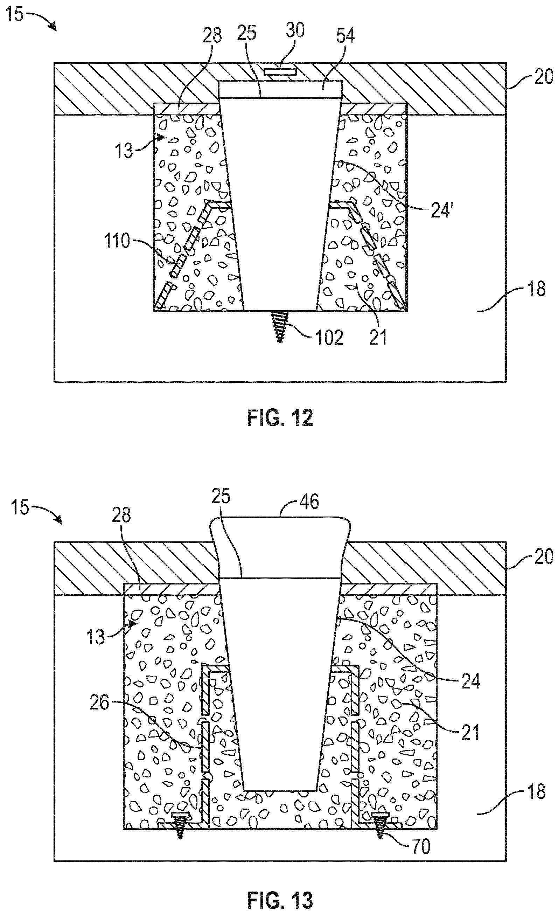

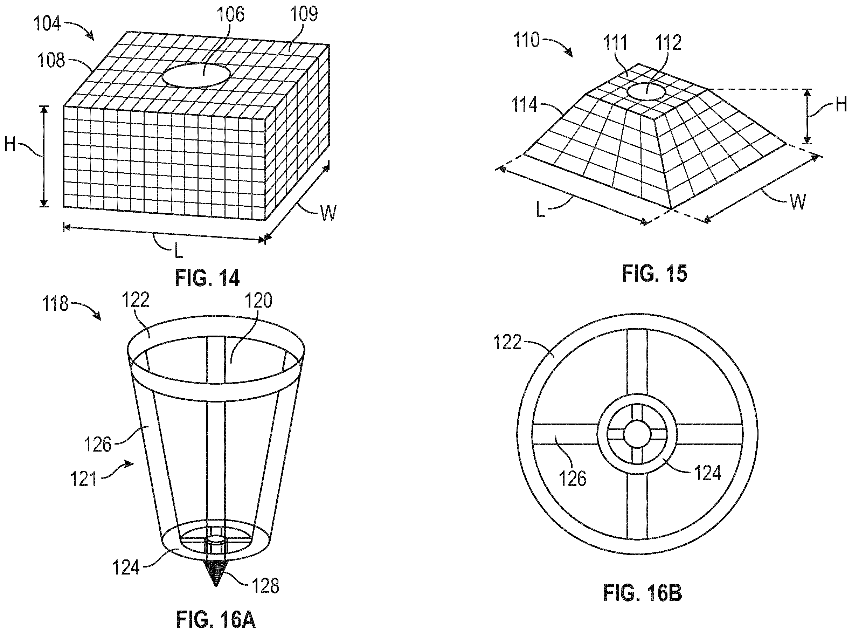

FIG. 12 illustrates an IPA system 15 including a non-osseous spacer 24' and anchor 110 positioned within the bone growth cavity 13. As shown in FIG. 12, the non-osseous spacer 24' is coupled to the cover screw 56 and the gingival tissue includes a suture 30 to secure the gingival tissue together after placement of the IPA system 15. As discussed herein, the position of the top surface 25 of the non-osseous spacer 24 and the cover screw 56 in relation to the membrane 28 and the gingival tissue 20 can vary and be dependent on various factors. As shown in FIG. 12, the non-osseous spacer 24' is in contact with the bone 18 defining the bone graft cavity 13. Optionally, the non-osseous spacer 24' includes a self-fastening feature 102, which in this case is a threaded post extending from the apical end of the non-osseous spacer 24'. The self-fastening feature 102 can be threaded or smooth. In one example, the self-fastening feature 102 can be threaded and the self-fastening feature 102 can be formed from a bioresorbable material such that the self-fastening feature 102 will resorb over time as the new bone grows. Additionally, the self-fastening feature 102 (including threads or smooth) can have a surface roughness that does not promote osseointegration, as discussed herein. The self-fastening feature 102 can be small enough to not cause issues when the dental implant is inserted but is used for an additional means of stabilization when the IPA system 15 is first implanted within the patient. As shown in FIG. 12, the anchor 110 is wedged within the bone graft cavity. For example, the anchor 110 illustrated in FIG. 12 can be seen in FIG. 15, which is a mesh frustum defining a spacer retention portion 112.

FIG. 13 illustrates the IPA system 15 including the non-osseous spacer 24 and anchor 26 positioned within the bone growth cavity 13. As shown in FIG. 13, the non-osseous spacer 24 is coupled to the healing abutment 46 that extends through the membrane 28 and the gingival tissue 20. As shown in FIG. 13, the non-osseous spacer 24 is not in contact with the bone 18 defining the bone graft cavity 13. The type of anchor and position of the non-osseous spacer 24 can vary and the surgeon placing the IPA system 15 can pick between various anchors and non-osseous spacers so that a desired position of the non-osseous spacer can be maintained. In this example, the bone graft material 21 is packed underneath the non-osseous spacer 24 to fill the void between the bone 18 and the bottom of the non-osseous spacer 24.

FIGS. 14 and 15 illustrate additional examples of anchors. As shown in FIG. 14, the anchor 104 is a mesh cube that includes body 108 having a height, width, and length, where the top surface defines a spacer retention portion 106. FIG. 15 illustrates an anchor 110 that is a mesh frustum that has a body 114 having a height, width, and length, where a top surface 111 defines a spacer retention portion 12.

FIGS. 16A and 16b illustrate an additional example of an anchor 118. The anchor 118 in FIGS. 16A and 16B is similar to a basket and includes a body 121 having a first proximal ring 122 spaced from a second apical ring 124 via elongated members 126. The cavity 120 defined by the first proximal ring 122, the second apical ring 124, and the elongated members 126 is the spacer retention portion that receives the non-osseous spacer. In the embodiment shown in FIGS. 16A and 16B, an apical end of the anchor 118 can include a fixation post 128 that can be threaded or not and configured to engage the bone of bone graft cavity to stabilize the non-osseous spacer within the bone graft cavity at a predetermined position.

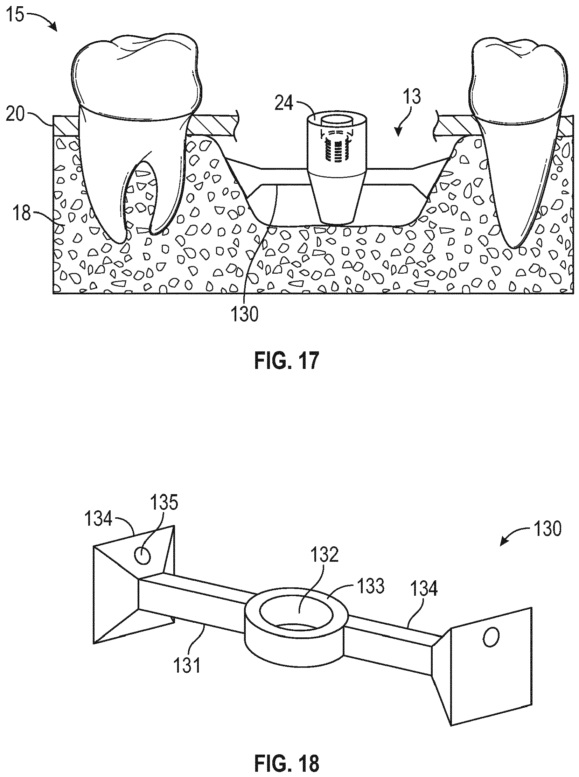

FIGS. 17 and 18 illustrate another example of an IPA system 15 implanted into a patient's jaw with the membrane and bone graft material not shown for simplicity. The anchor 130 shown in FIGS. 17 and 18 engage the sidewalls of the bone graft cavity 13. The anchor 130 includes an elongated body 131 having a central ring 133 defining the spacer retention portion 32, two legs 134 extending form the central ring 133 to the blunt ends 124 that engage the sidewall of the bone graft cavity 13. Optionally, the blunt ends 124 can include aperture 135 that can receive fasteners to further couple the anchor 130 to the bone graft cavity 13.

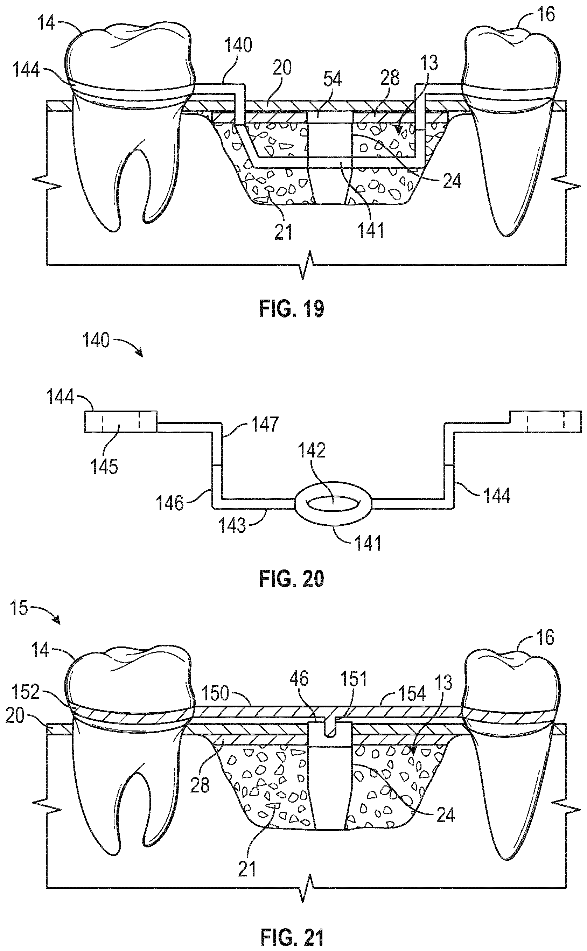

FIGS. 19-21 illustrate examples of IPA systems 15 where the anchor couples to adjacent teeth. As shown in FIGS. 19 and 20, the IPA system 15 includes the non-osseous spacer 24 positioned within the anchor 140, where bone graft material 21 is surrounding the non-osseous spacer 24 and a portion of the anchor 140. Further, the cover screw 54 is coupled to the non-osseous spacer 24 and the membrane 28 is covering the bone graft cavity 13. However, the anchor 140 includes a U-shaped body 143 having a central ring 141 defining the spacer retention portion 142 at the apical end of the U-shape and two legs 144 extending up and terminating at tooth engagement portion 144 that can define a hole 145 that can receive a portion of an adjacent tooth. In one example, anchor 140 can be formed from two different type of materials. For example, a portion 146 of the anchor 140 that is positioned within the bone graft cavity 13 can be formed from the bioresorbable material disclosed herein. However, a portion 140 above the bone graft cavity 13 and the portion that couples to adjacent teeth can be formed from the same material as the non-osseous spacer, such as, for example, titanium. In one example, the portion 140 can also have a surface roughness that does not promote osseointegration such that the portion 140 can extend slightly into the bone graft cavity 13 such that after healing, the portion 140 can easily be removed from the newly formed bone.

FIG. 21 illustrates an IPA system 15 that includes the non-osseous spacer 24 and an anchor 150. The bone graft material 21 is positioned within the bone graft cavity 13 the membrane 28 is covering the bone graft cavity 13. Compared to anchor 140, anchor 150 is positioned entirely above the bone graft cavity. The anchor 150 includes an elongated body 152 extending to at least one tooth engagement portion 152. FIG. 21 illustrates an example where the elongated body 152 extends between two tooth engagement portion 152 that are coupled to adjacent teeth 14, 16. Extending down from the elongated body 152 is a fixation post 151 that engages either the non-osseous spacer 24, the cover screw, or as shown in FIG. 21, the healing abutment 46.

As discussed herein, after the healing period where the new bone has formed within the bone graft cavity, the non-osseous spacer needs to be removed from the bone graft cavity. The space remaining after the non-osseous spacer is removed is the dental implant chamber that is immediately ready to receive a dental implant. Since the non-osseous spacer has prevented/minimized osseointegration with the surrounding bone, minimal torque is required to loosen and remove the non-osseous spacer from the bone graft cavity, which now has newly formed bone. Various removal tools can be used to remove the non-osseous spacer.

FIGS. 22A and 22B illustrate an example of a spacer removal tool. The spacer removal tool 170 is an elongated body 172 extending from a tool end 174 to a working end 176. The tool end 174 can be configured to engage with a tool or a user's hand. The working end 176 can have a non-rotational shape 178 that is configured to mate with the non-rotational shape of the first portion 44 of the bore 32 of the non-osseous spacer 24 (see FIG. 3A and 3B). Rotational force can be applied to the tool end 174 and the rotational force can be translated to the working end 76 and to the non-osseous spacer.

In one example, there can be a sufficient interference fit between the working end 176 and the first portion 44 of the bore 32 such that after the rotational force is applied, a linear force be applied to the tool end 174 that is translated to the non-osseous spacer such that the non-osseous spacer is removed from the bone graft cavity.

However, in certain instances, a second tool may be needed to remove the non-osseous spacer. For example, FIG. 23 illustrates another spacer removal tool 180 that be used alone or in addition to the spacer removal tool 170. The spacer removal tool 180 is an elongated body 182 extending from a tool end 184 to a working end 186. The tool end 184 can be configured to engage with a tool or a user's hand. The working end 186 can include threads 188 that are configured to engage with the second portion 42 of the bore 32 of the non-osseous spacer (see FIG. 3A).

If the removal tool 170 has been used to loosen the non-osseous spacer, the removal tool 180 can be used to couple with the second portion 42 of the bore 32 such that when a linear force is applied to the working end 184, the linear force is translated to the working end 186 and to the non-osseous spacer such that the non-osseous spacer is removed from the bone graft cavity that now includes newly formed bone.

If the removal tool 170 was not used, the rotational force used to engage the threads of the removal tool 180 and the second portion 42 of the bore 32 can continue until the rotational force is translated to the non-osseous spacer to loosen the non-osseous spacer within the bone graft cavity. Once loosened, the linear force can be applied to remove the non-osseous spacer from the bone graft cavity.

In one non-limiting example, the healing period for allowing the bone growth cavity to form new bone can be about 6 months. After the healing period, the non-osseous spacer can be removed. For example, the surgical site can be reopened and the non-osseous spacer removed as discussed herein. FIG. 24 illustrates the jawbone of a patient after the non-osseous spacer has been removed. As seen in FIG. 24, bone 18 now occupies the bone growth cavity that was once devoid of bone 18 and the space occupied by the non-osseous spacer forms the dental implant chamber 200.

After the non-osseous spacer has been removed, an endosseous implant can be immediately placed within the dental implant chamber 20. The endosseous implant can be wider than the dental implant chamber 20 such that threads of the dental implant carve into the newly restored ride and is screwed into the bone. FIG. 25 illustrates the jawbone of a patient after the non-osseous spacer has been removed and a dental implant 204 has been implanted into the dental implant chamber 200. The compression of the threads and the implant fixation the dental implant chamber 200 provide immediate fixation and stability. As shown in FIG. 25, a healing abutment 206 is coupled to the dental implant 204. Any type of healing abutment can be used, e.g., circular healing abutment, anatomical healing abutments, coded abutments, and others can be used. As discussed herein, anatomical healing abutments (non-circular) can be used to shape the gingival tissue. The healing abutment 206 can be coupled to the dental implant 204 for 2-3 weeks to allow for healing before the final prosthesis is attached.

In one embodiment, the healing abutment 206 can be scanned or an impression such that a 3D model of the patient's mouth including the healing abutment can be generated. Based on information from the healing abutment 206, the position and orientation of the dental implant 204 within the patient can be determined and the final prothesis can be designed, fabricated, and coupled to the dental implant. FIG. 26 illustrates the jawbone of a patient shown in FIG. 25 where the healing abutment 206 has been replaced with the final prosthesis 208.

As discussed herein, the present invention can generate new bone and form the dental implant chamber simultaneously over a healing period of about six (6) months. After the healing period, a dental implant can be immediately placed and coupled to a healing abutment for a second healing period of about 2-3 weeks, after which a scan or impression of the patient's mouth can be taken to design the final prosthesis.

Thus, as compared to the current VRA procedure/implant placement treatment that can take twelve (12) to fourteen (14) months, the present invention can grow new bone, implant a dental implant, and couple the dental implant to a final prosthesis is about half the time.

### VARIOUS NOTES & EXAMPLES

Example 1 is a method of forming a dental implant chamber in an alveolar ridge of a jawbone of a patient. The method includes positioning an implant placement assist (IPA) system within a bone graft cavity of the jawbone of the patient, the IPA system including: a non-osseous spacer having surface that does not promote osseointegration; and an anchor configured to stabilize the spacer within the bone graft cavity; inserting a bone graft material around the IPA system in the bone graft cavity where augmentation is desired; and removing, after a healing period, the non-osseous spacer from the jawbone creating the dental implant chamber.
In Example 2, the subject matter of Example 1 optionally includes where the non-osseous spacer has a surface roughness value (Ra) equal to or less than 1 Ra such that osseointegration is not promoted.
In Example 3, the subject matter of any one or more of Examples 1-2 optionally includes where the non-osseous spacer has a surface roughness value (Ra) about 0.03 Ra
In Example 4, the subject matter of any one or more of Examples 1-3 optionally includes where the anchor is formed of a bioresorbable material.
In Example 5, the subject matter of Example 4 optionally includes where the bioresorbable material is selected from at least one of polymers, copolymers, ceramics, and composites.
In Example 6, the subject matter of any one or more of Examples 1-5 optionally further including coupling an attachment member to the non-osseous anchor.
In Example 7, the subject matter of Example 6 optionally includes where the attachment member is selected from one of a cover screw and healing cap.
In Example 8, the subject matter of any one or more of Examples 1-7 optionally further including covering the bone graft cavity including the bone graft material and the IPA system with a membrane for a healing time period.
In Example 9, the subject matter of Example 8 optionally includes where the membrane covers at least a portion of the non-osseous spacer.
In Example 10, the subject matter of any one or more of Examples 1-9 optionally includes where the membrane is formed form a bioresorbable material.
In Example 11, the subject matter of any one or more of Examples 1-10 optionally includes, after removing the non-osseous spacer from the jawbone, the method further includes implanting the dental implant within the dental implant chamber.
In Example 12, the subject matter of Example 11 optionally further includes attaching a final prosthesis to the dental implant restrict axial movement of the platform along a longitudinal axis of the housing.
In Example 13, the subject matter of Example 12 optionally further includes attaching, prior to attaching a final prosthesis to the dental implant, a healing abutment to the dental implant for a second healing period.
In Example 14, the subject matter of Example 13 optionally further includes scanning the healing abutment and designing the final prosthesis to be coupled to the dental implant.
Example 15 is an implant placement assist (IPA) system for forming a dental implant chamber in a jawbone of a patient. The IPA system includes a non-osseous spacer having a surface that does not promote osseointegration; and an anchor configured to stabilize the spacer within a bone graft cavity of the patient.
In Example 16, the subject matter of Example 15 optionally includes where the non-osseous spacer has a surface roughness value (Ra) equal to or less than 1 Ra such that osseointegration is not promoted.
In Example 17, the subject matter of any one or more of Examples 15-16 optionally includes where the non-osseous spacer has a surface roughness value (Ra) of about 0.03 Ra.
In Example 18, the subject matter of any one or more of Examples 15-17 optionally includes wherein the anchor is formed of a bioresorbable material.
In Example 19, the subject matter of Example 18 optionally includes where the bioresorbable material is selected from at least on of polymers, copolymers, ceramics, and composites.
In Example 20, the subject matter of any one or more of Examples 15-19 optionally includes wherein the anchor includes a plurality of pores.
In Example 21, the subject matter of any one or more of Examples 15-20 optionally includes where the anchor is malleable to form a shape sufficient to stabilize the non-osseous anchor within the bone cavity of a patient.
In Example 22, the subject matter of any one or more of Examples 15-21 optionally includes wherein the anchor further includes a plurality of fasteners configured to engage surrounding bone and secure the anchor to the jawbone of the patient.
In Example 23, the subject matter of any one or more of Examples 15-22 optionally further includes bone graft material to be inserted with the bone graft cavity and around the non-osseous spacer and the anchor.
In Example 24, the subject matter of Example 23 optionally further includes a bioresorbable membrane configured to be positioned over the bone graft cavity including the non-osseous spacer, the anchor, and the bone graft material for a healing period.
In Example 25, the subject matter of any one or more of Examples 15-24 optionally further includes at least one of a cover screw, and a healing cap, the cover screw and the healing cap configured to be coupled to the non-osseous anchor during a healing period.
In Example 26, the systems or methods of any one of or any combination of Examples 1-25 are optionally configured such that all elements or options recited are available to use or select from. Each of these non-limiting examples can stand on its own, or can be combined in various permutations or combinations with one or more of the other examples.

It will be readily understood to those skilled in the art that various other changes in the details, material, and arrangements of the parts and method stages which have been described and illustrated in order to explain the nature of the inventive subject matter can be made without departing from the principles and scope of the inventive subject matter as expressed in the subjoined claims.

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. An implant placement assist (IPA) system for forming a dental implant chamber in a jawbone of a patient, the IPA system including:
a non-osseous spacer having a surface that does not promote osseointegration; and
an anchor configured to stabilize the spacer within a bone graft cavity of the patient.

2. The IPA system of claim 1, wherein the non-osseous spacer has a surface roughness value (Ra) equal to or less than 1 Ra such that osseointegration is not promoted.

3. The IPA system according to any one of claims 1 and 2, wherein the non-osseous spacer has a surface roughness value (Ra) of about 0.03 Ra.

4. The IPA system according to any one of claims 1-3, wherein the anchor is formed of a bioresorbable material.

5. The IPA system of claim 4, wherein the bioresorbable material is selected from at least on of polymers, copolymers, ceramics, and composites.

6. The IPA system according to any one of claims 1-5, wherein the anchor includes a plurality of pores.

7. The IPA system according to any one of claims 1-6, wherein the anchor is malleable to form a shape sufficient to stabilize the non-osseous anchor within the bone cavity of a patient.

8. The IPA system according to any one of claims 1-7, wherein the anchor further includes:
a plurality of fasteners configured to engage surrounding bone and secure the anchor to the jawbone of the patient.

9. The IPA system of claim 8, wherein the plurality of fasteners are formed from the bioresorbable material.

10. The IPA system according to any one of claims 1-9, further including:
bone graft material to be inserted with the bone graft cavity and around the non-osseous spacer and the anchor.

11. The IPA system of claim 10, further including:
a bioresorbable membrane configured to be positioned over the bone graft cavity including the non-osseous spacer, the anchor, and the bone graft material for a healing period.

12. The IPA system according to any one of claims 1-11, further including at least one of:
a cover screw; and
a healing cap, the cover screw and the healing cap configured to be coupled to the non-osseous anchor during a healing period.
